# EUROPEAN PATENT SPECIFICATION

(11) **EP 2 988 005 B1**
(45) Date of publication and mention of the grant of the patent: **06.03.2019**
(21) Application number: 15179621.6
(22) Date of filing: 04.08.2015
(51) Int. Cl.: F04D 29/02, F01D 9/04, F04D 29/54, F04D 29/64, F01D 5/28

(54) **MOUNTING ARRANGEMENT FOR AN AEROFOIL BODY, VANE ASSEMBLY, AXIAL COMPRESSOR AND GAS TURBINE ENGINE THEREWITH**
MONTAGEANORDNUNG FÜR EINEN FLÜGEL, SCHAUFFELANORDNUNG, AXIALVERDICHTER UND GASTURBINENTRIEBWERK DAMIT
AGENCEMENT DE MONTAGE POUR UNE AUBE, ENSEMBLE D'AUBE, COMPRESSEUR AXIAL ET MOTEUR À TURBINE À GAS DOTÉS D'UN TEL AGENCEMENT

(30) Priority: 18.08.2014 GB 201414587
(43) Date of publication of application: 24.02.2016
(73) Proprietor: Rolls-Royce plc, London SW1E 6AT (GB)
(72) Inventor: Radomski, Steven, Derby, Derbyshire DE24 8BJ (GB); Jevons, Matthew, Derby, Derbyshire DE24 8BJ (GB)
(74) Representative: Rolls-Royce plc

(56) References cited:
- WO-A1-2013/115349
- US-A- 5 083 900
- US-A1- 2005 254 942
- US-A1- 2014 147 264
- Frances I Hurwitz ET AL: "Ceramic matrix and resin matrix composites - A comparison", , 1 January 1987 (1987-01-01), XP055517806, Retrieved from the Internet: URL:https://ntrs.nasa.gov/archive/nasa/cas i.ntrs.nasa.gov/19870009182.pdf [retrieved on 2018-10-22]

## Description

The present invention relates to an aerofoil body such as a blade or guide vane for a gas turbine engine and a mounting arrangement for such an aerofoil body.

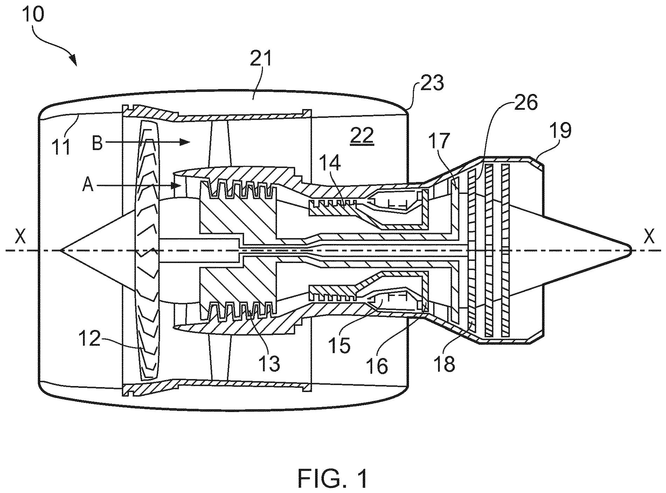

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Each of the high and intermediate compressors 14, 13 comprises a number of alternating series of circumferentially-spaced rotating blades and circumferentially-spaced static vanes. The rotating blades act to compress the air flow A whilst the static vanes act to direct the compressed air onto the next series of rotating blades. Outlet guide vanes (OGVs) at the exit of the high pressure compressor 14 act to optimise (straighten) the direction of the air flow A into the combustion equipment 15.

The OGVs are mounted between an inner ring and an outer ring, the vanes and rings typically being formed of homogenous metallic or reinforced metallic/non-metallic material. OGV assemblies formed of reinforced plastic material are preferable as they are lighter than metallic OGV assemblies. In OGV assemblies formed of reinforced plastics material, the vanes may affixed to the inner and outer rings using either dove-tail joints or "L-angle" joints. In both cases, the vanes are formed with the reinforcing fibres aligned from the root to the tip of the vane. When a dovetail joint is used to affix the vane to the rings, the reinforcing fibres are splayed towards the root and/or tip of the vane and wedging fibres are introduced between the splayed fibres to form the necessary wedge-shaped root/tip portion. When an L-angle joint is used to affix the vane to rings, the reinforcing fibres are angled through 90 degrees.

Both dovetail joints and L-angle joints have their weaknesses. Dovetail joints, whilst good under tension, are poor under compression, shear and bending. L-angle joints, whilst good under shear loading, are poor under direct loading and bending. To accommodate these weaknesses, in both joint styles, the OGV needs to be significantly thickened which compromises the aerodynamic efficiency.

There is the need for an improved mounting arrangement between a reinforced plastic OGV and the supporting inner and outer rings which firmly affixes the vane to the rings and which can accommodate direct, shear and bending forces without requiring a thickening of the vane.

US 2005/0254942 relates to a joining method for assembling components with complex shapes from ceramic matrix composite (CMC) elements of simpler shapes. Two CMC elements are joined in a mating interface that captures an inner joining portion of the second element within a surrounding outer joining portion of the first element. The assembled elements are then fired together, resulting in differential shrinkage that compresses the outer joining portion onto the inner joining portion, providing a tightly pre-stressed joint.

In a first aspect, the present invention provides a mounting arrangement in accordance with claim 1.

By providing a ridge portion having two, oppositely inclined faces on each side of the root/tip portion, reaction of tension, compression and bending loads applied to the aerofoil body is improved because the forces can be better transferred to the surrounding structures supporting the aerofoil body. Unlike an aerofoil body with a dovetail wedge (which only has one inclined surface on each of the pressure/suction surfaces and which can only react tensile forces adequately), reaction of compressive forces as well as shearing and bending forces is accommodated well. The compressive forces are reacted by the inclined faces opposite to those normally provided on a dovetail wedge and the reaction of shearing and bending forces are improved because there are two faces on each of the pressure/suctions surfaces for moment reaction.

Optional features of the invention will now be set out. These are applicable singly or in any combination with any aspect of the invention.

In some embodiments, the pressure surface and suction surface of both the root and tip portion each comprise a respective ridge portion, each ridge portion having a respective inclined first face and a respective oppositely inclined second face.

In some embodiments, the first and second faces of each ridge portion join one another at the apex of the respective ridge portion.

In some embodiments, the height of the ridge portion from the respective pressure/suction surface is between 10 and 50% of the spacing between the pressure and suction surfaces of the root/tip portion.

In some embodiments, the first and second faces of each ridge portion are oppositely and equally inclined.

In some embodiments, the first face and/or second face of each ridge portion is/are planar.

Where both the first and second faces are planar and join one another at the apex of the ridge portion, the ridge portion is shaped as a triangular prism. Since the ridge portions are provided on both the pressure and suction surfaces, the root/tip portion has a thickened portion formed of the opposing ridge portions, the thickened portion having a substantially diamond/kite-shaped cross-sectional profile (at right angles to the pressure/suction surfaces of the aerofoil body).

In some embodiments, the first face and/or second faces of each ridge portion is/are curved e.g. the first and/or second faces of each ridge portion is/are convex surfaces.

Where both the first and second faces are convex and join one another at the apex of the ridge portion, the ridge portion is shaped as a semi-circular prism. Since the ridge portions are provided on both the pressure and suction surfaces, the root/tip portion has a thickened portion formed of the opposing ridge portions, the thickened portion having a substantially circular cross-sectional profile (at right angles to the pressure/suction surfaces of the aerofoil body).

In some embodiments, the ridge portions are spaced from the end of the root/tip portion. This further improves the moment reaction for bending/shearing forces.

In some embodiments, the aerofoil body is a blade e.g. a blade for a fan, compressor or turbine in a gas turbine engine. In some embodiments, the aerofoil body is a vane e.g. a guide vane such as an outlet guide vane for a compressor in a gas turbine engine.

In some embodiments, the aerofoil body is formed of an organic matrix composite (OMC) in the form of fibre reinforced plastic material.

The organic matrix may be a thermoplastic polymer matrix.

In some embodiments, the fibres e.g. glass, ceramic or carbon fibres in the reinforced plastic material used to manufacture the aerofoil body are substantially aligned in the aerofoil body from the root to tip portion and are splayed in the vicinity of the ridge portions with wedging plies inserted between the splayed fibres.

By providing a mounting bracket having a central portion housing the ridge portions and perpendicularly extending flange portions (which can be affixed e.g. bolted, onto the inner or outer annular supports), shearing loads on the aerofoil body can be transferred to the central portion of the mounting bracket through the oppositely inclined faces of the ridge portion and subsequently through 90 degrees to the flange portions without requiring a thickening of the aerofoil body.

The or each bracket may be said to have a wasted section that cooperates with the ridge portion of the tip or root. The central portion may be described as and/or may comprise such a wasted section.

In some embodiments, the mounting arrangement comprises two mounting brackets, one having a central portion housing the ridge portions on the root portion and one having a central portion housing the ridge portions on the tip portion.

The at least one mounting bracket may be affixed e.g. bolted to the radially outer surface of the radially inner annular support or the radially inner surface of the radially outer annular support. Fairings may be provided to cover the fixings to improve aerodynamic efficiency.

In some embodiments where the aerofoil body has ridge portions at only one of the root/tip portion, the mounting bracket may be affixed to the radially inner surface of the radially inner annular support or to the radially outer surface of the radially outer annular support with the aerofoil body extending through the radially inner/radially outer annular support. In this way, the fixings are kept out of the gas flow path.

In some embodiments, the mounting bracket(s) is/are formed of a sheet moulding compound (SMC) e.g. from a glass, ceramic or carbon fibre-reinforced plastics material. In this case, the fibres may be aligned in the central portion and then deflect through 90 degrees to extend along the flange portions. According to the present invention, the mounting bracket(s) is/are cured or moulded around the root and/or tip portion of the aerofoil body. This obviates the need for bolting of the root/tip portion of the aerofoil body which, in turn, allows a reduction in the radial length of the aerofoil body (since bolting requires a certain spacing between the bolt and the radial end of the root/tip portion to ensure structural integrity of the root/tip portion).

The mounting bracket(s) may have web portions having an inclined surface extending from the central portion to the flange portions to reinforce the mounting bracket.

In another aspect, the present invention provides a vane assembly as defined in claim 12.

The mounting brackets may be affixed e.g. bolted to the radially outer surface of the radially inner annular support and radially inner surface of the radially outer annular support. Fairings may be provided to cover the fixings to improve aerodynamic efficiency.

In some embodiments, the vane assembly comprises a plurality of circumferentially-spaced aerofoil assemblies each according to the second aspect.

In another aspect, the present invention provides an axial compressor for a gas turbine engine as defined in claim 14.

In another aspect, the present invention provides a gas turbine engine as defined in claim 15.

Embodiments of the invention will now be described by way of example with reference to the accompanying drawings in which:
Figure 1 shows a ducted fan gas turbine engine;
Figure 2 shows a first embodiment of an outlet guide vane assembly; and
Figure 3 shows a second embodiment of an aerofoil body.

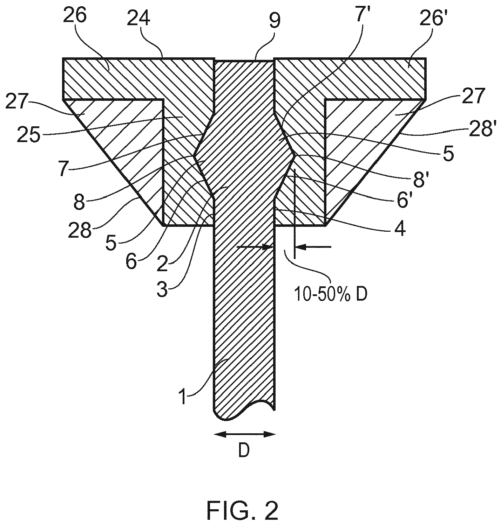

Figure 2 shows an outlet guide vane assembly comprising an aerofoil body (vane) 1 comprising a root portion 2 and a tip portion (not shown).

The root portion 2 has a pressure surface 3 and a suction surface 4. Each surface comprises a ridge portion 5, 5'. Each ridge portion 5, 5' comprises an inclined first face 6, 6' and an oppositely and equally inclined second face 7, 7'.

The first and second faces 6, 6', 7, 7' are planar and join one another at the apex 8, 8' of the ridge portion 5, 5'. Accordingly, each ridge portion 5, 5' is shaped as a triangular prism. Since ridge portions 5, 5' provided on both the pressure and suction surfaces 3, 4, the root portion 2 has a thickened portion formed of the opposing ridge portions 5, 5', the thickened portion having a substantially diamond/kite-shaped cross-sectional profile (at right angles to the pressure/suction surfaces 3, 4 of the aerofoil body 1).

The height of the ridge portions 5, 5' i.e. distance from the apex 8, 8' to the respective pressure surface/suction surface 3, 4 is between 10 and 50% of the spacing D between the pressure and suction surfaces 3, 4 of the root portion 2.

The ridge portions 5, 5'are spaced from the end 9 of the root portion 2.

The aerofoil body (vane) 1 is formed of a fibre reinforced plastics material. The plastic matrix material may be a thermoplastic polymer. The fibres e.g. glass, ceramic or carbon fibres in the reinforced plastic material are substantially aligned in the aerofoil body 1 from the root portion 2 to tip portion and are splayed in the vicinity of the ridge portions 5, 5' with wedging plies inserted between the splayed fibres. The fibres may be provided in the form of a non-crimped fabric.

A mounting bracket 24 formed of fibre-reinforced plastic is moulded around the root portion 2 and has a central portion 25 which surrounds the ridge portions 5. Two opposing flange portions 26, 26' extend perpendicularly from the central portion 25. The fibres in fibre reinforced plastic are aligned in the central portion 25 (parallel to the fibres in the aerofoil body 1) and then deflect through 90 degrees to extend along the flange portions 26, 26'. The mounting bracket 24 has web portions 27, 27' each having an inclined surface 28, 28' extending from the central portion 25 to the flange portions 26, 26' to reinforce the mounting bracket 24.

The flange portions 26, 26' are affixed e.g. bolted to a radially inner annular support (not shown). It should be noted that the radially annular support will support a series of circumferentially-spaced aerofoil bodies (vanes) identical to that shown in Figure 2.

Although not shown, the tip portion of each aerofoil body 1 may have an identical structure to the root portion 2 and is retained within a respective second mounting bracket which is affixed to an outer annular support. Accordingly, Figure 2 may alternatively show a tip portion, with the same reference numerals applying to both the root portion and the tip portion.

By providing ridge portions 5, 5' having two, oppositely inclined faces 6, 6', 7, 7' on each side of the root/tip portions 2, reaction of tension, compression and bending loads applied to the aerofoil body 1 is improved because the forces can be better transferred (through the mounting bracket 24) to the annular supports supporting the aerofoil body 1. The mounting bracket 24 acts to transfer the loads through 90 degrees to the flange portions 26, 26' without requiring a thickening of the aerofoil body 1.

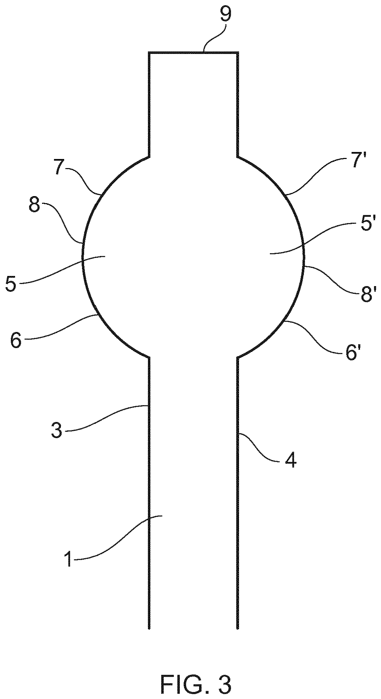

A second embodiment of an aerofoil body in shown in Figure 3. In this embodiment, the first face and second faces 6, 6', 7, 7' of each ridge portion 5, 5' are curved convex surfaces which meet at the apex 8, 8' such that the ridge portions 5, 5' are shaped as a semi-circular prism. Since ridge portions 5, 5' are provided on both the pressure and suction surfaces 3, 4, the root portion 2 having a thickened portion formed of the opposing ridge portions 5, 5', the thickened portion having a substantially circular cross-sectional profile (at right angles to the pressure/suction surfaces 3, 4 of the aerofoil body 1). The exemplary embodiments of the invention set forth above are considered to be illustrative and not limiting. Various changes to the described embodiments may be made within the scope of the appended claims.

## Claims

1. A mounting arrangement for mounting an aerofoil body on an annular support, the mounting arrangement comprising:
an aerofoil body (1) comprising a root portion (2) and a tip portion (2), each having a pressure surface (3) and a suction surface (4), wherein the pressure surface and suction surface of the root and/or tip portion each comprise a respective ridge portion (5, 5'), each ridge portion having an inclined first face (6, 6') and an oppositely inclined second face (7, 7'), and
at least one mounting bracket (24), wherein:
the at least one mounting bracket has a central portion (25) housing the ridge portions on the root and/or tip portion and an opposing flange portion (26, 26') extending from the central portion at right angles to the central portion and for affixing to the annular support; the mounting bracket(s) is/are cured or moulded around the root and/or tip portion of the aerofoil body,
**characterized in that**
the mounting bracket(s) is/are formed from an organic matrix composite and the aerofoil body is formed of an organic matrix composite or a metal matrix composite.

2. A mounting arrangement according to claim 1, wherein the first and second faces of the ridge portion join one another at an apex (8, 8') of the ridge portion.

3. A mounting arrangement according to claim 1 or 2 wherein the first and second faces of the ridge portion are oppositely and equally inclined.

4. A mounting arrangement according to any one of the preceding claims, wherein the first face and/or second face of each ridge portion is/are planar.

5. A mounting arrangement according to claim 4, wherein the ridge portion is shaped as a triangular prism.

6. A mounting arrangement according to any one of claims 1 to 4 wherein the first face and/or second faces of each ridge portion is/are curved.

7. A mounting arrangement according to claim 6 wherein the first and/or second faces of each ridge portion is/are convex surfaces and, optionally, the ridge portion is shaped as a semi-circular prism.

8. A mounting arrangement according to any one of the preceding claims wherein the pressure surface and suction surface of both the root and tip portion of the aerofoil body each comprise a respective ridge portion.

9. A mounting arrangement according to any one of the preceding claims wherein:
the aerofoil body is formed of a fibre-reinforced plastic material; and/or
the aerofoil body is an outlet guide vane for a compressor in a gas turbine engine.

10. A mounting arrangement according to any one of the preceding claims, wherein the mounting bracket(s) have web portions (27, 27') having an inclined surface (28, 28') extending from the central portion to the flange portions.

11. A mounting arrangement according to any one of the preceding claims comprising two mounting brackets, one having a central portion housing the ridge portions on the root portion and one having a central portion housing the ridge portions on the tip portion.

12. A vane assembly comprising:
a mounting arrangement according to claim 11;
a radially inner annular support; and
a radially outer annular support,
wherein the flange portions of the mounting bracket having a central portion housing the ridge portions on the root portion are affixed to the radially inner annular support and the flange portions of the mounting bracket having a central portion housing the ridge portions on the tip portion are affixed to the radially outer annular support.

13. A vane assembly according to claim 12 comprising a plurality of circumferentially-spaced aerofoil assemblies.

14. An axial compressor for a gas turbine engine (10) having a mounting arrangement according to any one of claims 1 to 11 or a vane assembly according to claim 12 or 13.

15. A gas turbine engine (10) having a mounting arrangement according to any one of claims 1 to 11, a vane assembly according to claim 12 or 13 or an axial compressor according to claim 14.

## Patentansprüche

1. Montageanordnung zum Montieren eines Flügelkörpers an einem ringförmigen Träger, wobei die Montageanordnung umfasst:
einen Flügelkörper (1), umfassend einen Wurzelabschnitt (2) und einen Spitzenabschnitt (2), jeweils mit einer Druckfläche (3) und einer Saugfläche (4), wobei die Druckfläche und die Saugfläche des Wurzel- und/oder Spitzenabschnitts jeweils einen jeweiligen Leistenabschnitt (5, 5') umfassen, wobei jeder Leistenabschnitt eine geneigte erste Fläche (6, 6') und eine entgegengesetzt geneigte zweite Fläche (7, 7') aufweist, und mindestens eine Montageklammer (24), wobei:
die mindestens eine Montageklammer einen zentralen Abschnitt (25), der die Leistenabschnitte des Wurzel- und/oder Spitzenabschnitts aufnimmt, und einen gegenüberliegenden Flanschabschnitt (26, 26'), der sich vom zentralen Abschnitt im rechten Winkel zum zentralen Abschnitt erstreckt und zum Befestigen des ringförmigen Trägers aufweist;
wobei die Montageklammer(n) um den Wurzel- und/oder Spitzenabschnitt des Flügelkörpers gehärtet oder geformt ist/sind, **dadurch gekennzeichnet, dass** die Montageklammer(n) aus einem organischen Matrixverbundmaterial geformt ist/sind und der Flügelkörper aus einem organischen Matrixverbundmaterial oder einem metallischen Matrixverbundmaterial geformt ist.

2. Montageanordnung nach Anspruch 1, wobei die ersten und zweiten Flächen des Leistenabschnitts an einem Scheitelpunkt (8, 8') des Leistenabschnitts ineinander übergehen.

3. Montageanordnung nach Anspruch 1 oder 2, wobei die ersten und zweiten Flächen des Leistenabschnitts entgegengesetzt und gleich geneigt sind.

4. Montageanordnung nach einem der vorstehenden Ansprüche, wobei die erste Fläche und/oder die zweite Fläche jedes Leistenabschnitts planar ist/sind.

5. Montageanordnung nach Anspruch 4, wobei der Leistenabschnitt als dreieckiges Prisma geformt ist.

6. Montageanordnung nach einem der Ansprüche 1 bis 4, wobei die erste Fläche und/oder die zweiten Flächen jedes Leistenabschnitts gekrümmt ist/sind.

7. Montageanordnung nach Anspruch 6, wobei die ersten und/oder zweiten Flächen jedes Leistenabschnitts konvexe Oberflächen ist/sind und der Leistenabschnitt als halbkreisförmiges Prisma geformt ist.

8. Montageanordnung nach einem der vorstehenden Ansprüche, wobei die Druckfläche und die Saugfläche sowohl des Wurzel- als auch des Spitzenabschnitts des Flügelkörpers jeweils einen jeweiligen Leistenabschnitt umfassen.

9. Montageanordnung nach einem der vorstehenden Ansprüche, wobei: der Flügelkörper aus einem faserverstärkten Kunststoffmaterial geformt ist;
und/oder der Flügelkörper eine Ausgangsführungsschaufel für einen Kompressor in einem Gasturbinentriebwerk ist.

10. Montageanordnung nach einem der vorstehenden Ansprüche, wobei die Montageklammer(n) Stegabschnitte (27, 27') mit einer geneigten Oberfläche (28, 28') aufweisen, die sich vom zentralen Abschnitt zu den Flanschabschnitten erstreckt.

11. Montageanordnung nach einem der vorstehenden Ansprüche, umfassend zwei Montageklammern, eine mit einem zentralen Abschnitt, der die Leistenabschnitte am Wurzelabschnitt aufnimmt, und eine mit einem zentralen Abschnitt, der die Leistenabschnitte am Spitzenabschnitt aufnimmt.

12. Schaufelanordnung, umfassend:
Montageanordnung nach Anspruch 11; einen radial inneren ringförmigen Träger; und einen radial äußeren ringförmigen Träger, wobei die Flanschabschnitte der Montageklammer, die einen zentralen Abschnitt aufweisen, der die Leistenabschnitte am Wurzelabschnitte aufnimmt, am radial inneren ringförmigen Träger befestigt sind, und die Flanschabschnitte der Montageklammer, die einen zentralen Abschnitt aufweisen, der die Leistenabschnitte am Spitzenabschnitt aufnimmt, am radial äußeren ringförmigen Träger befestigt sind.

13. Schaufelanordnung nach Anspruch 12, umfassend eine Vielzahl von in Umfangsrichtung beabstandeten Flügelgruppen.

14. Axialer Kompressor für ein Gasturbinentriebwerk (10), aufweisend eine Montageanordnung nach einem der Ansprüche 1 bis 11 oder eine Schaufelanordnung nach Anspruch 12 oder 13.

15. Gasturbinentriebwerk (10), aufweisend eine Montageanordnung nach einem der Ansprüche 1 bis 11, eine Schaufelanordnung nach Anspruch 12 oder 13 oder einen axialen Kompressor nach Anspruch 14.

## Revendications

1. Dispositif de montage destiné au montage d'un corps de surface portante sur un support annulaire, le dispositif de montage comprenant :
un corps de surface portante (1) comprenant une partie d'emplanture (2) et une partie de pointe (2), chacune possédant une surface de pression (3) et une surface d'aspiration (4), dans lequel la surface de pression et la surface d'aspiration de la partie d'emplanture et/ou de pointe comprennent chacune une partie d'arête respective (5, 5'), chaque partie d'arête possédant une première face inclinée (6, 6') et une seconde surface inclinée de manière opposée (7, 7'), et au moins un support de montage (24), dans lequel :
l'au moins un support de montage possède une partie centrale (25) recevant les parties d'arêtes sur la partie d'emplanture et/ou de pointe et une partie de bride opposée (26, 26') se déployant depuis la partie centrale à angles droits jusqu'à la partie centrale et destinée à fixer le support annulaire ;
le(s) support(s) de montage est(sont) durci(s) ou moulé(s) autour de la partie d'emplanture et/ou de pointe du corps de surface portante, **caractérisé en ce que** le(s) support(s) de montage est(sont) formé(s) à partir d'un composite de matrice organique et le corps de surface portante est formé d'un composite de matrice organique ou d'un composite de matrice métallique.

2. Dispositif de montage selon la revendication 1, dans lequel la première et la seconde faces de la partie d'arête se rejoignent l'une l'autre au niveau d'un sommet (8, 8') de la partie d'arête.

3. Dispositif de montage selon la revendication 1 ou 2, dans lequel la première et la seconde faces de la partie d'arête sont inclinées de manière opposée et égale.

4. Dispositif de montage selon l'une quelconque des revendications précédentes, dans lequel la première face et/ou la seconde face de chaque partie d'arête est(sont) planaire(s).

5. Dispositif de montage selon la revendication 4, dans lequel la partie d'arête est formée comme un prisme triangulaire.

6. Dispositif de montage selon l'une quelconque des revendications 1 à 4, dans lequel la première face et/ou la seconde face de chaque partie d'arête est/sont incurvée(s).

7. Dispositif de montage selon la revendication 6, dans lequel la première face et/ou la seconde face de chaque partie d'arête est/sont des surfaces convexes et, en option, la partie d'arête est formée comme un prisme semi-circulaire.

8. Dispositif de montage selon l'une quelconque des revendications précédentes, dans lequel la surface de pression et la surface d'aspiration de la partie d'emplanture et de la partie de pointe du corps de surface portante comprennent chacune une partie d'arête respective.

9. Dispositif de montage selon l'une quelconque des revendications précédentes, dans lequel :
le corps de surface portante est formé d'un matériau plastique renforcé de fibres ;
et/ou le corps de surface portante est une aube directrice de sortie pour un compresseur dans une turbine à gaz.

10. Dispositif de montage selon l'une quelconque des revendications précédentes, dans lequel le(s) support(s) de montage possèdent des parties en voile (27, 27') possédant une surface inclinée (28, 28') se déployant depuis la partie centrale jusqu'aux parties de bride.

11. Dispositif de montage selon l'une quelconque des revendications précédentes, comprenant deux supports de montage, un possédant une partie centrale recevant les parties d'arêtes sur la partie d'emplanture et un possédant une partie centrale recevant les parties d'arêtes sur la partie de pointe.

12. Ensemble d'aubes comprenant :
un dispositif de montage selon la revendication 11 ;
un support annulaire radialement interne ; et
un support annulaire radialement externe,
dans lequel les parties de brides du support de montage possédant une partie centrale recevant les parties d'arêtes sur la partie d'emplanture sont fixées au support annulaire radialement interne et les parties de brides du support de montage possédant une partie centrale recevant les parties d'arêtes sur la partie de pointe sont fixées au support annulaire radialement externe.

13. Ensemble d'aubes selon la revendication 12, comprenant une pluralité d'ensembles de surfaces portantes espacées de manière circonférentielle.

14. Compresseur axial pour une turbine à gaz (10) possédant un dispositif de montage selon l'une quelconque des revendications 1 à 11 ou un ensemble d'aubes selon la revendication 12 ou 13.

15. Turbine à gaz (10) possédant un dispositif de montage selon l'une quelconque des revendications 1 à 11, un ensemble d'aubes selon la revendication 12 ou 13 ou un compresseur axial selon la revendication 14.
